# EUROPEAN PATENT SPECIFICATION

(11) **EP 4 386 942 B1**
(45) Date of publication and mention of the grant of the patent: **15.07.2026**
(21) Application number: 23740437.1
(22) Date of filing: 11.01.2023
(51) Int. Cl.: H01M 10/6556, H01M 10/6551, H01M 10/613, H01M 10/647, H01M 50/242, H01M 50/211

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 11.01.2022 KR 20220003809; 10.01.2023 KR 20230003719
(43) Date of publication of application: 19.06.2024
(73) Proprietor: LG Energy Solution, Ltd., Seoul 07335 (KR)
(72) Inventor: LEE, Jung Hoon, Daejeon 34122 (KR); YANG, Jaehun, Daejeon 34122 (KR); KIM, Seho, Daejeon 34122 (KR); KIM, Dooseung, Daejeon 34122 (KR); PARK, Jeong Gi, Daejeon 34122 (KR)
(74) Representative: Goddar, Heinz J.
(86) International application number: PCT/KR2023/000474
(87) International publication number: WO 2023/136593

(56) References cited:
- WO-A1-2012/010347
- WO-A1-2020/031619
- KR-A- 20130 064 969
- KR-A- 20160 041 407
- KR-A- 20170 084 522
- KR-A- 20180 023 699
- KR-A- 20210 000 548
- KR-B1- 101 367 210
- US-A1- 2015 194 714
- US-A1- 2016 079 640
- US-A1- 2019 089 026
- US-A1- 2021 028 517
- US-B2- 8 383 260
- US-B2- 9 806 381

## Description

### [TECHNICAL FIELD]

The present disclosure relates to a battery module and a battery pack including the same, and more particularly, to a battery module having a water-cooled type cooling structure and a battery pack including the same

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior material.

In the case of a secondary battery used for small-sized devices, two to three battery cells are arranged, but in the case of a secondary battery used for a medium- and large-sized device such as automobiles, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a BDU(battery disconnect unit), a BMS (battery management system) and a cooling system to form a battery pack.

When a secondary battery is heated over a proper temperature, the performance of the secondary battery may deteriorate, and in the worst case, there is also a risk of an explosion or ignition. In particular, a plurality of secondary batteries, that is, a battery module or a battery pack having battery cells can accumulate the heat emitted from the plurality of battery cells in a narrow space, which may raise the temperature of the battery module quickly and severely. In other words, a battery module including a large number of battery cells, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, if a battery module is included in a battery pack for a vehicle1, the battery module may be frequently exposed to direct sunlight and may be placed under high-temperature conditions, for example, in summer or in a desert. Therefore, when configuring a battery module or a battery pack, it may be very important to ensure stable and effective cooling performance. Cooling methods of battery modules or battery packs can be largely classified into a water cooling method using a coolant such as cooling water and an air cooling method using cooling wind. Among them, water-cooled type cooling has excellent cooling performance and can effectively cool high heat generated from large-capacity battery modules or battery packs.

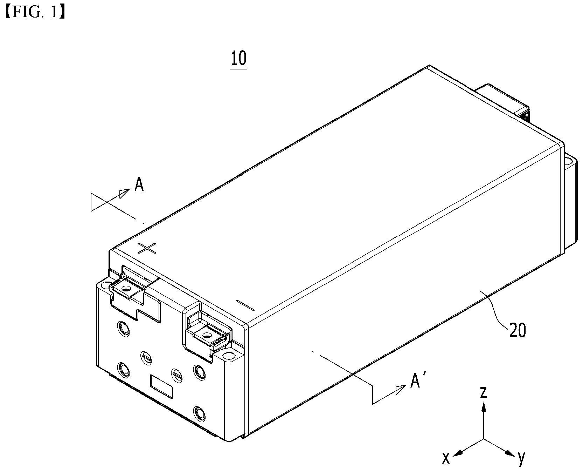

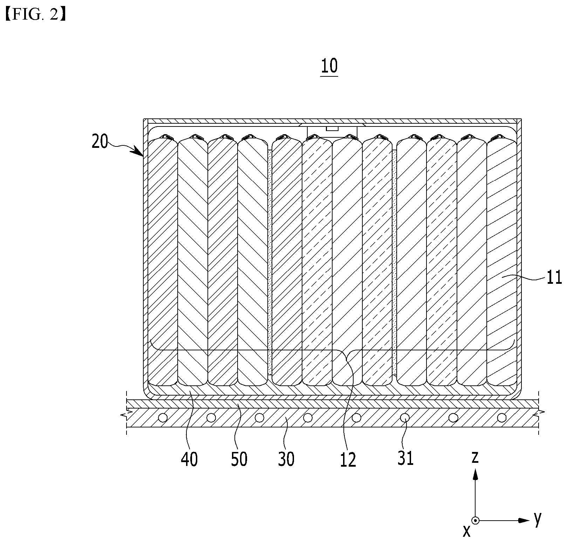

FIG. 1 is a perspective view of a conventional battery module, and FIG. 2 is a cross-sectional view showing a cross section taken along the cutting line A-A' of FIG. 1. However, FIG. 2 further shows a heat sink 30 arranged under the battery module 10 for convenience of explanation.

Referring to FIGS. 1 and 2, the conventional battery module 10 includes a battery cell stack 12 in which a plurality of battery cells 11 are stacked and a module frame 20 that houses the battery cell stack 12. At this time, the battery cell 11 is a pouch-type battery cell, and the pouch-type battery cell forms a rectangular sheet structure.

Since a plurality of battery cells 11 are stacked, the battery module 10 generates a large amount of heat in a charge and discharge process. The battery module 10 including the pouch-type battery cell was cooled by indirectly or directly contacting the edge of the battery cells 11 with a heat sink 30 having a fixed position and size.

Specifically, the battery module 10 may include a thermal resin layer 40 located between the battery cell stack 12 and the bottom part of the module frame 20. Further, when the battery module 10 is mounted on the pack frame to form a battery pack, the heat transfer member 50 and the heat sink 30 may be sequentially located under the battery module 10. The heat transfer member 50 may be a heat dissipation pad, and the heat sink 30 may form a cooling flow path 31 through which a coolant such as cooling water flows. Edges of the battery cells 11 stacked along one direction are in contact with the thermal resin layer 40, and heat generated from the battery cell 11 may be transferred to the outside of the battery module 10 via the thermal resin layer 40, the bottom part of the module frame 20, the heat transfer member 50, and the heat sink 30 in order. That is, the conventional battery module 10 adopts a water-cooled type structure in which heat is discharged through the edges of the battery cells 11.

Such a water-cooled type structure utilizing the edges of the battery cells 11 has a relatively simplified structure, but causes deterioration of cooling performance, and there is a risk of cracks occurring in the pouch case or the like of the battery cell 11 when high swelling of the battery cell 11 occurs.

Specifically, the battery cells 110 may cause a phenomenon in which the internal electrolyte decomposes to generate gas and the battery cell 110 swells in the process of repeated charging and discharging or in the initial charging process, that is, a swelling or breathing phenomenon.

As the capacity of the battery cell increases, the degree of swelling also increases greatly, and the number of battery cells applied to the battery module tends to increase gradually. Therefore, controlling the swelling of battery cells inside battery modules has become an important issue.

At this time, referring to FIG. 2 again, generally, the thermal resin layer 40 has an adhesive property to fix the battery cells 11. Thus, when swelling of the battery cell 11 occurs, high stress occurs at the edge of the battery cell 11, which may lead to cracking in the pouch case of the battery cell 11. In particular, the more battery cells 11 located outside the battery cell stack 12, the greater the stress due to swelling, which results in a high risk of cracking.

In order to realize high-capacity battery modules and battery packs in the future, pure Si cells, all-solid-state batteries, and high-SiO-content cells can be applied as pouch battery cells. For such battery cells, the degree of swelling is greater.

When the water cooling method utilizing the edge as in a conventional case is applied to a battery module including battery cells having a high degree of swelling, there is a high risk of cracks occurring in the battery cell, and excessive stress acts, which can impair the structural safety of the battery module.

Accordingly, there is a demand for a battery module having a novel cooling structure that can minimize structural damages generated in the battery cell even if it includes battery cells exhibiting high swelling characteristics.

The document KR 101 367 210 B1 discloses a heat dissipation unit of a plurality of battery cells installed in an electric vehicle.

### [DETAILED DESCRIPTION OF THE INVENTION]

### [Technical Problem]

It is an object of the present invention to provide a battery module that can minimize structural damages generated in the battery cell even if it includes battery cells exhibiting high swelling characteristics, and a battery pack including the same.

### [Technical Solution]

A battery module according to the invention includes a battery cell stack in which battery cell groups including at least one battery cell are stacked along a first direction; and a heat sink including a cooling tube through which a coolant flows. Each of the battery cell groups further comprises a first cell frame located on the upper part of at least one battery cell or a second cell frame located on the lower part of at least one of the battery cells. The cooling tube comprises at least one bent part having a curved shape. The cooling tube covers both side surfaces of any one of the battery cell groups while the bent part surrounds the upper part or the lower part of the battery cell group.

The bent parts may be formed in a plurality of numbers, any one of the bent parts surrounds both side surfaces and an upper part of any one of the battery cell groups, the other one of the bent parts surrounds both side surfaces and a lower part of the other one of the battery cell groups, and the cooling tubes may continue in a zigzag shape.

Any one of the bent parts may surround both side surfaces of any one of the battery cell groups and the first cell frame, and the other one of the bent parts may surround the both side surfaces of the other battery cell groups and the second cell frame.

The battery module may further comprise an upper frame and a lower frame each located on the upper part and the lower part of the battery cell stack.

The first cell frame may be coupled to the upper frame at a lower side of the upper frame, and the second cell frame may be coupled to the lower frame at an upper side of the lower frame.

An expanded foam may be injected into at least one of a space between the battery cell stack and the upper frame or a space between the battery cell stack and the lower frame.

According to the invention, each of the first cell frame and the second cell frame comprises a housing groove in which the at least one battery cell is seated, and a protrusion part formed on a surface opposite to the surface on which the housing groove is formed.

According to the invention, an upper frame and a lower frame are located on the upper part and the lower part of the battery cell stack, respectively, and each of the upper frame and the lower frame is formed with an insertion hole into which the protrusion part is inserted.

The protrusion part of the first cell frame may be inserted into the insertion hole of the upper frame, and the protrusion part of the second cell frame may be inserted into the insertion hole of the lower frame.

At least one of the insertion holes has an opening width wider than that of the protrusion part in the first direction, which is a direction in which the battery cell groups are stacked, so that the protrusion part is movable in the first direction or in the opposite direction.

At least one of the upper frame or the lower frame may comprise a fixed part and a moving part. An opening width in the first direction of the insertion hole in the moving part may be wider than an opening width in the first direction of the insertion hole in the fixed part.

The moving part may be located at one end of a direction parallel to the first direction.

The moving part may be formed in a plurality of numbers, the moving parts may be located at both ends in a direction parallel to the first direction, and the fixed part may be located between the moving parts.

In the fixing part, the first cell frame and the second cell frame may be adhered to the upper frame and the lower frame through an adhesive member, respectively.

At least one of the upper frame and the lower frame is configured such that the opening width of the insertion holes in the first direction may become gradually wide from a central part toward the first direction and a direction opposite to the first direction.

The housing groove may be formed with an opening having an open shape, and at least one battery cell in the battery cell group may be in contact with the bent part through the opening.

The battery module may further comprise side plates located on both side surfaces of the battery cell stack along the first direction, wherein the side plate may have a leaf spring shape.

The side plate may have a shape in which a plurality of leaf spring members are arranged at intervals along the height direction.

The side plate may have a leaf spring shape that is recessed in a direction in which the battery cell stack is located.

The side plate comprises a composite material, and the composite material may be Fiber Reinforced Plastic (FRP) or Carbon Fiber Reinforced Plastic (CFRP).

The composite material may comprise a fiber material, a resin, and a sheet material interposed between the fiber materials. The fiber material may comprise a glass fiber or a carbon fiber. The resin may comprise at least one of epoxy or urethane, and the sheet material may comprise at least one of PET or PU.

The heat sink may comprise an inflow manifold connected to one end of the cooling tube and a discharge manifold connected to the other end of the cooling tube. The inflow manifold may be formed with an inflow part into which the coolant flows, and the discharge manifold may be formed with a discharge part through which coolant is discharged.

A battery pack according to one embodiment of the present disclosure comprises the above-mentioned battery module.

### [Advantageous Effects]

According to the present invention, when swelling of the battery cell occurs, a moving cooling structure and a frame structure that can move fluidly according to the degree of swelling can be realized, thereby minimizing damages generated in the battery cell during the swelling process.

In addition, surface cooling rather than edge cooling can be applied to further improve the cooling performance of the battery cells.

The effects of the present invention are not limited to the effects mentioned above and additional other effects not mentioned above will be clearly understood from the description of the appended claims by those skilled in the art.

### [BRIEF DESCRIPTION OF THE DRAWINGS]

FIG. 1 is a perspective view of a conventional battery module;
FIG. 2 is a cross-sectional view showing a cross section taken along the cutting line A-A' of FIG. 1;
FIG. 3 is a perspective view showing a battery module according to one embodiment of the present invention;
FIG. 4 is a front view of the battery module of FIG. 3 as viewed from direction B;
FIG. 5 is a perspective view showing a state in which an upper frame, a lower frame, and a side plate are removed from the battery module of FIG. 3;
FIG. 6 is a front view showing one of the battery cells included in the battery module of FIG. 5;
FIG. 7 is a plan view of the battery module of FIG. 5 as viewed from a direction C;
FIG. 8 is a perspective view showing a heat sink, a first cell frame, and a second cell frame included in the battery module of FIG. 5;
FIG. 9 is a front view showing a heat sink according to an embodiment of the present disclosure;
FIG. 10 is a cross-sectional view showing a cross section taken along the cutting line D-D' of FIG. 9;
FIGS. 11(a) and (b) are perspective views showing a first cell frame or a second cell frame according to an embodiment of the present invention;
FIG. 12 is a bottom view of the battery module of FIG. 3;
FIG. 13 is a bottom view of a battery module according to another embodiment of the present invention;
FIG. 14 is a bottom view of a battery module according to another embodiment of the present invention;
FIG. 15 is a perspective view showing a state in which an adhesive member is attached to a first cell frame and a second cell frame according to an embodiment of the present invention;
FIGS. 16 and 17 are a perspective view and a side view of a side plate included in the battery module of FIG. 3, respectively;
FIGS. 18 (a) and (b) are diagrams for explaining the material of the side plate according to an embodiment of the present invention; and
FIG. 19 is a perspective view showing a first cell frame or a second cell frame according to a modified embodiment of the present invention.

### [DETAILED DESCRIPTION OF THE EMBODIMENTS]

Hereinafter, various embodiments of the present invention will be described in detail with reference to the accompanying drawings so that those skilled in the art can easily carry out them. The present invention may be modified in various different ways, and is not limited to the embodiments set forth herein.

Portions that are irrelevant to the description will be omitted to clearly describe the present invention, and like reference numerals designate like elements throughout the description.

Further, in the drawings, the size and thickness of each element are arbitrarily illustrated for convenience of description, and the present invention is not necessarily limited to those illustrated in the drawings. In the drawings, the thickness of layers, regions, etc. are exaggerated for clarity. In the drawings, for convenience of description, the thicknesses of a part and an area are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

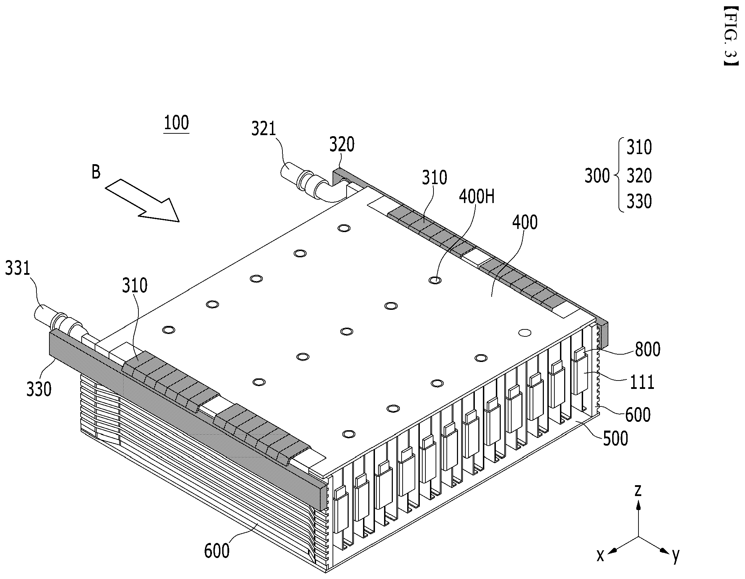

FIG. 3 is a perspective view showing a battery module according to one embodiment of the present invention.

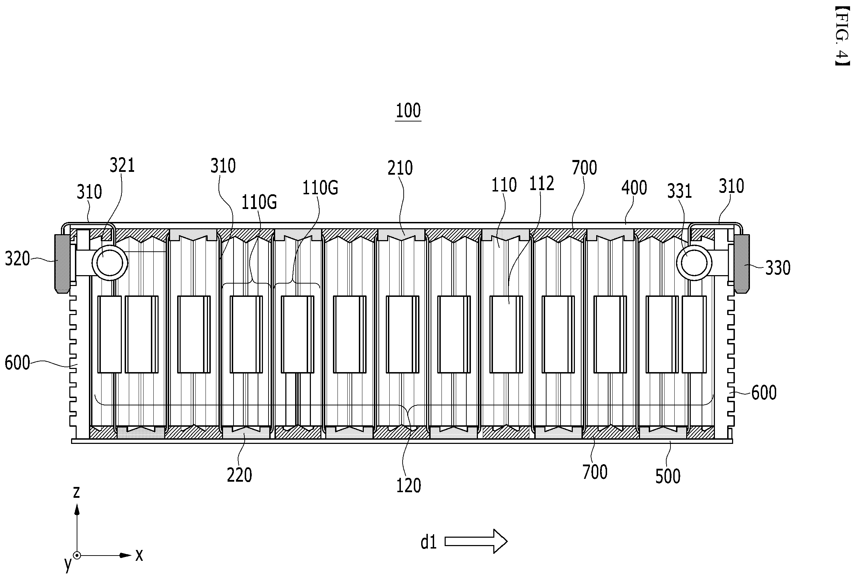

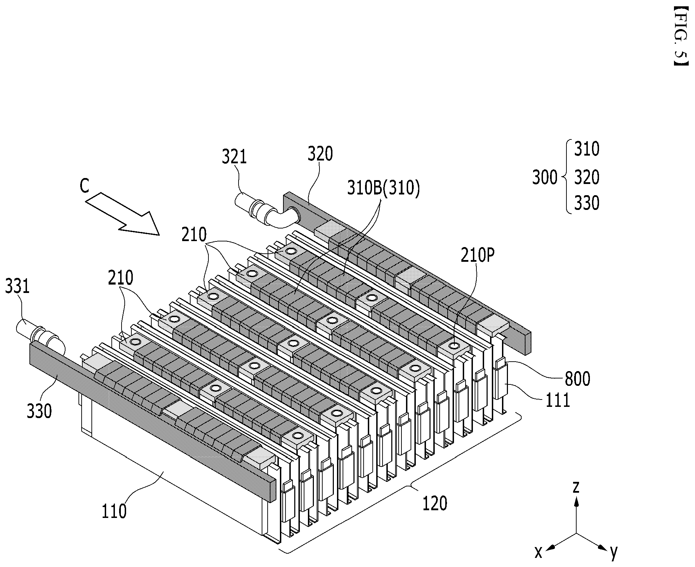

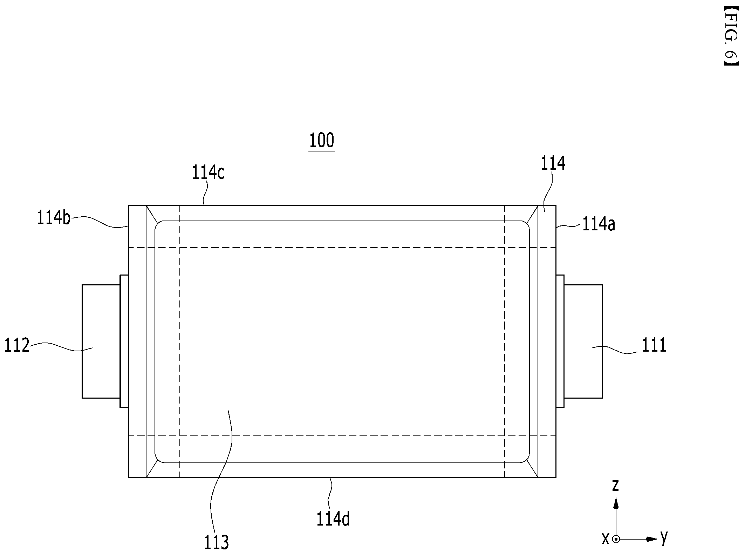

FIG. 4 is a front view of the battery module of FIG. 3 as viewed from direction B. FIG. 5 is a perspective view showing a state in which an upper frame, a lower frame, and a side plate are removed from the battery module of FIG. 3. FIG. 6 is a front view showing one of the battery cells included in the battery module of FIG. 5.

Referring to FIGS. 3 to 6, a battery module 100 according to one embodiment of the present invention includes a battery cell stack 120 in which battery cell groups 110G are stacked along a first direction d1; and a heat sink 300 including a cooling tube 310 through which a coolant flows. In addition, the battery module 100 may further include an upper frame 400 and a lower frame 500 each located on the upper part and the lower part of the battery cell stack 120.

The battery cell group 110G includes at least one battery cell 110. That is, one battery cell 110 may form a battery cell group 110G, and a plurality of battery cells 110 may form one battery cell group 110G. As will be described later, the battery cell group 110G herein may be a unit that distinguishes an assembly of battery cells 110 wrapped around the bent part 310B of the cooling tube 310 while being housed in the first cell frame 210 or the second cell frame 220.

First, the battery cell 110 may be a pouch-type battery cell. Such a pouch-type battery cell may be formed by housing an electrode assembly in a pouch case, which is a laminated sheet containing a resin layer and a metal layer, and then joining the outer peripheral part of the pouch case. The battery cell 110 may be formed in a rectangular sheet-like structure as shown in FIGS. 4 to 6. Specifically, the battery cell 110 according to the present embodiment has a structure in which two electrode leads 111 and 112 face each other and protrude from one end 114a and the other end 114b of the battery main body 113, respectively. The battery cell 110 can be produced by joining both ends 114a and 114b of a cell case 114 and one side part 114c connecting them in a state in which an electrode assembly (not shown) is housed in a cell case 114. In other words, the battery cell 110 according to one embodiment of the present invention has a total of three sealing parts, wherein the sealing parts have a structure that is sealed by a method such as fusion, and the remaining other side part 114d may be formed of a folded portion of the battery case 114.

However, the battery cell 110 described above is an illustrative structure, and it goes without saying that a unidirectional battery cell in which the two electrode leads protrude in the same direction is available.

At least one battery cell 110 forms a battery cell group 110G, and such battery cell groups 110G are stacked in the first direction d1 to form the battery cell stack 120. The first direction d1 is a direction perpendicular to one surface of the battery main body 113 of the battery cells 110, and is expressed as a direction parallel to the x-axis direction with reference to FIGS. 4 and 6.

Each of the battery cell groups 110G includes a first cell frame 210 located on the upper part of at least one battery cell 110 or a second cell frame 220 located on the lower part of at least one battery cell 110.

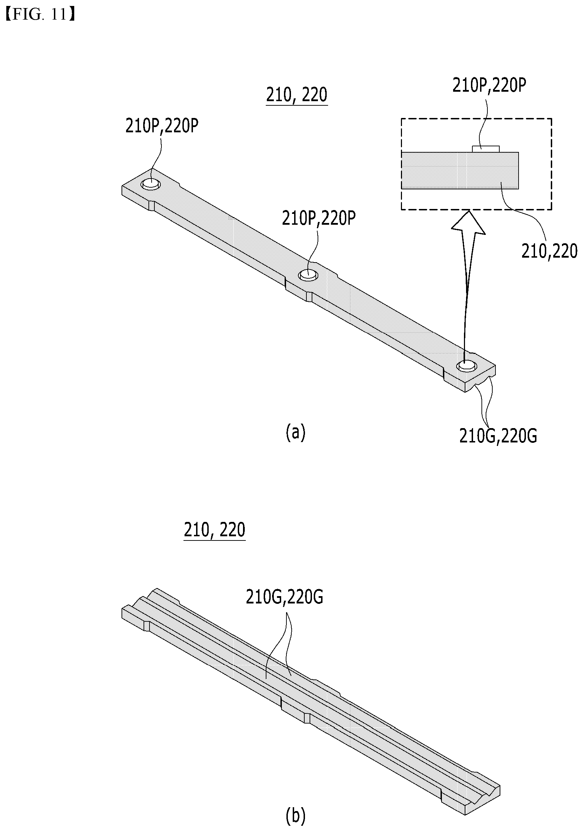

Specifically, at least one battery cell 110 in the battery cell group 110G may be seated on either the first cell frame 210 or the second cell frame 220. More specifically, one side of at least one battery cell 110 is seated on either the first cell frame 210 or the second cell frame 220, so that at least one battery cell 110 can be fixed within a battery cell group 110G. As will be described later, the first cell frame 210 and the second cell frame 220 are formed with housing grooves in which the battery cells 110 are seated, so that the battery cells 110 can be housed therein. The first cell frame 210 and the second cell frame 220 are of configuration having the same shape, but there is a difference in the arrangement position with respect to the battery cell 110 in the battery module 100. Detailed structures of the first cell frame and the second cell frame will be described later with reference to FIG. 11.

As shown in FIGS. 4 and 5, when any one battery cell group 110G includes the first cell frame 210, the battery cell group 110G adjacent thereto includes the second cell frame 220. That is, in the battery cell groups 110G arranged along the first direction d1, the battery cell group 110G including the first cell frame 210 and the battery cell group 110G including the second cell frame 220 may be alternately arranged.

Meanwhile, the battery module 100 includes an upper frame 400 and a lower frame 500 each located on the upper part and the lower part of the battery cell stack 120, wherein the upper frame 400 and the lower frame 500 may be plate-like members. The upper frame 400 may be located on the upper part of the first cell frames 210, and the lower frame 500 may be located on the lower part of the second cell frames 220.

Next, the heat sink according to the present embodiment will be described in detail with reference to FIGS. 5 and 7 to 10.

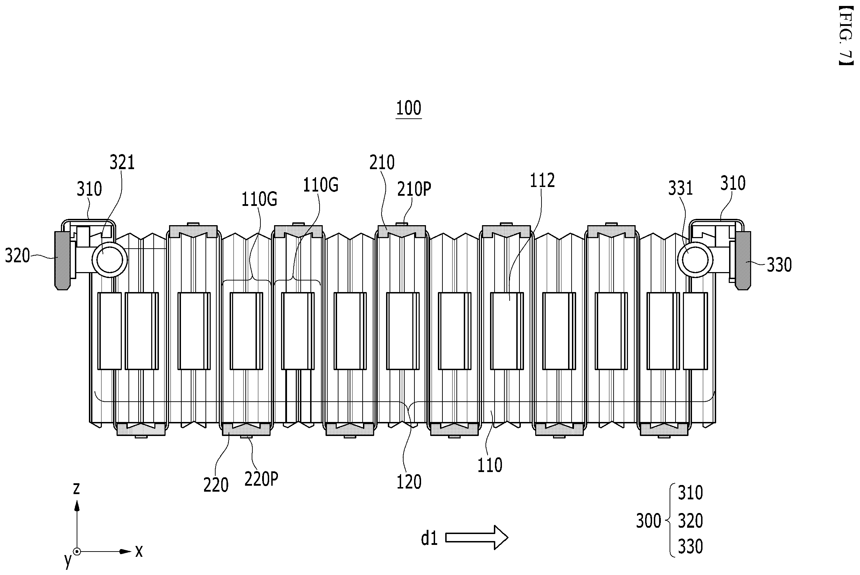

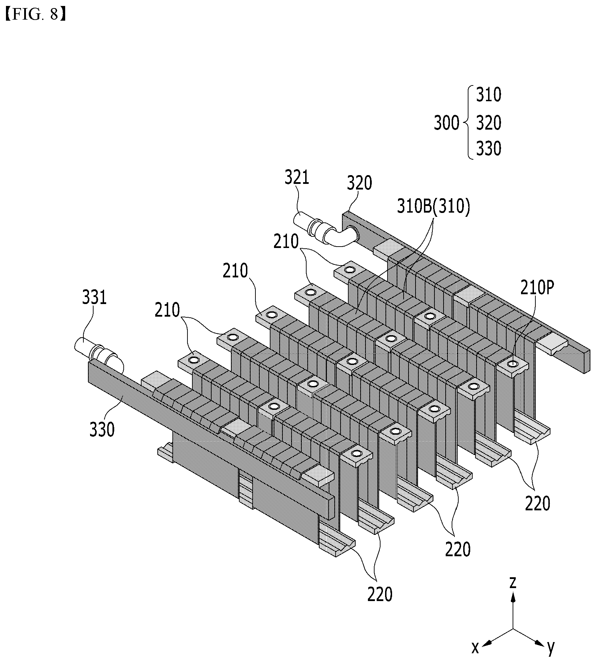

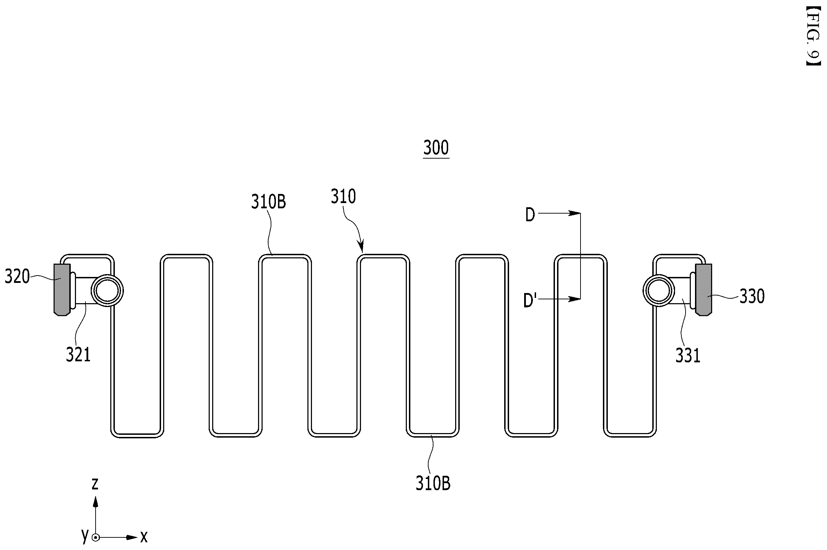

FIG. 7 is a plan view of the battery module of FIG. 5 as viewed from a direction C. FIG. 8 is a perspective view showing a heat sink, a first cell frame, and a second cell frame included in the battery module of FIG. 5. FIG. 9 is a front view showing a heat sink according to an embodiment of the present invention.

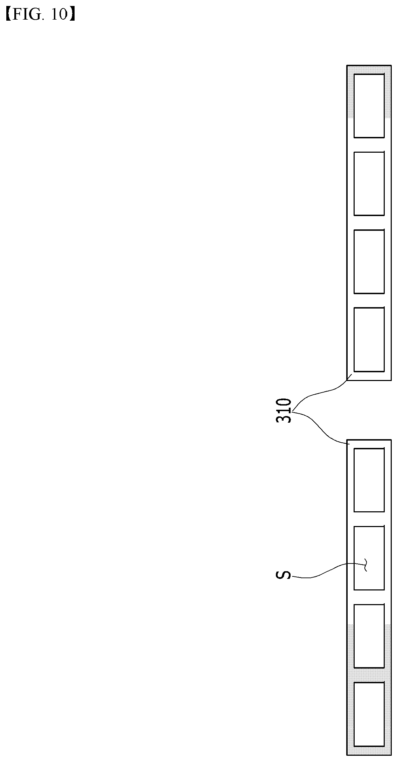

FIG. 10 is a cross-sectional view showing a cross section taken along the cutting line D-D' of FIG. 9.

Referring to FIGS. 5 and 7 to 10 together, the heat sink 300 according to the present embodiment includes a cooling tube 310 in which a coolant flows inside, and the cooling tube 310 includes at least one bent part 310B having a curved shape. The cooling tube 310 may cover both side surfaces of any one of the battery cell groups 110G while the bent part 310B surrounds the upper part or the lower part of the battery cell group 110G. That is, a partial region of the cooling tube 310 including the bent part 310B may cover the upper part and both side surfaces of the battery cell group 110G or cover the lower part and both side surfaces of the battery cell group 110G.

More specifically, as shown in FIGS. 5, 7, 8 and 9, the bent part 310B may be formed in a plurality of numbers, wherein any one of the bent parts 310B surrounds both side surfaces and an upper part of any one of the battery cell groups 110G, the other one of the bent parts 310B surrounds both side surfaces and a lower part of the other one of the battery cell groups 110G, and the cooling tubes 310 may continue in a zigzag shape. More specifically, any one of the bent parts 310B surrounds both side surfaces of any one of the battery cell groups 110G and the first cell frame 210, and the other one of the bent parts 310B may surround both side surfaces of the other one of the battery cell groups 110G and the second cell frame 220. As described above, the battery cell group 110G including the first cell frame 210 and the battery cell group 110G including the second cell frame 220 may be alternately arranged, wherein one of the bent parts 310B surrounds the battery cell group 110G including the first cell frame 210, the next bent part 310B surrounds the battery cell group 110G including the second cell frame 220, and the cooling tube 310 as a whole may continue in a zigzag shape.

The heat sink 300 according to the present embodiment may include an inflow manifold 320 connected to one end of cooling tube 310 and a discharge manifold 330 connected to the other end of cooling tube 310. The inflow manifold 320 may be formed with an inflow part 321 into which the coolant flows, and the discharge manifold 330 may be formed with a discharge part 331 through which coolant is discharged. The shape of the inflow part 321 and the discharge part 331 is not particularly limited, and may be a tubular shape or an opening hole shape. In FIGS. 3, 5, 8 and the like, the tubular inflow part 321 and the discharge part 331 are shown by way of example.

As shown in FIG. 10, at least one space S is formed inside the cooling tube 310, and such a space S may communicate with the inflow part 321 and the discharge part 331. Thus, the coolant that has flowed in through the inflow part 321 flows into the cooling tube 310 via the inflow manifold 320. The coolant flowing along the inner space S of the cooling tube 310 may be finally discharged through the discharge part 331 via the discharge manifold 330. A coolant flows along the periphery of the battery cells 110 and absorbs heat generated from the battery cells 110. The coolant may be cooling water. The battery module 100 according to the present embodiment has a water-cooled type cooling structure.

At this time, the zigzag-shaped cooling tube 310 surrounds and continues the side surfaces of the battery cell groups 110G, that is, one surface of the battery main body 113 (see FIG. 6) of the battery cell 110. That is, the cooling tube 310 is in contact with one surface of the battery main body 113 of the battery cell 110. While the conventional battery module 10 shown in FIGS. 1 and 2 has an edge cooling structure in which heat is discharged through the edge of the battery cell 11, whereas the battery module 100 according to the present embodiment has a surface cooling structure in which the cooling tube 310 is in contact with one surface of the battery main body 113 of the battery cells 110. Since the whole of one surface of the battery main body 113 of the battery cell 110 can abut on the cooling tube 310 and thus, the cooling area is much wider, it has the advantage of exhibiting excellent cooling performance compared to the conventional battery module 10.

Further, as mentioned above, the battery cells 110 may cause a phenomenon in which the internal electrolyte decomposes to generate gas and the battery cell 110 swells in the process of repeated charging and discharging, that is, a swelling or breathing phenomenon. In the case of the conventional battery module 10, since the edges of the battery cells 11 are adhesively fixed to the thermal resin layer 40, high stress is generated at the edges of the battery cells 11 when swelling occur, which may lead to the generation of crack in the pouch case of the battery cell 11.

On the other hand, in the case of the battery module according to the present embodiment, since the cooling tube 310 of the heat sink 300 for cooling is continued in a zigzag shape and arranged between the battery cells 110, the battery cells 110 are not adhesively fixed to specific points. Even if high swelling or breathing occurs in the battery cells 110, the assembly form between the battery cell stack 120 and the heat sink 300 can provide some degree of structural flexibility in the first direction d1, which is the stacking direction of the battery cells 110, thereby being able to prevent the generation of crack in the pouch case of the battery cell 110.

Further, in the swelling or breathing phenomenon of the battery cells 110, the battery cells 110 are expanded in the thickness direction. The portion of the cooling tube 310 located between the battery cells 110 may absorb expansion of the battery cells 110. Conventionally, in order to absorb swelling of the battery cells 110, compression pads made of foam material are interposed between the battery cells 110. In the present embodiment, the portion of the cooling tube 310 located between the battery cells 110 can absorb swelling of the battery cells 110 and replace the function of the conventional compression pad. That is, the cooling tube 310 according to the present embodiment may perform not only the surface cooling function for the battery cells 110 but also the function of absorbing swelling of the battery cells 110.

Next, the first cell frame and the second cell frame according to the present embodiment will be described in detail with reference to FIG. 11 and the like.

FIGS. 11 (a) and (b) are perspective views showing a first cell frame or a second cell frame according to one embodiment of the present invention.

The first cell frame 210 and the second cell frame 220 are distinguished by being located on the upper part or the lower part of the battery cells. However, since they are of configurations having the same shape, the specific structure will be described together.

FIG. 11(a) shows the first cell frame 210 or the second cell frame 220 at an angle at which the protrusion parts 210P and 220P are seen, and FIG. 11(b) shows the first cell frame 210 or the second cell frame 220 at an angle at which the housing grooves 210G and 220G in which the battery cells 110 are seated are seen.

Referring to FIGS. 5, 8 and 11 (a) and (b), each of the first cell frame 210 and the second cell frame 220 according to the present embodiment includes housing grooves 210G and 220G in which at least one battery cell 110 is seated. As described above, the first cell frame 210 and the second cell frame 220 may have the same shape, but the difference is that the first cell frame 210 is located on the upper part of the battery cells 110, and the second cell frame 220 is located on the lower part of the battery cells 110. The housing grooves 210G and 220G may be formed on one surface of the first cell frame 210 or the second cell frame 220 facing the at least one battery cell 110.

Within one battery cell group 110G, one or more battery cells 110 are inserted and mounted into the housing groove 210G of the first cell frame 210 or the housing groove 220G of the second cell frame 220. As an example, in FIG. 11 (b), it is shown that two housing grooves 210G and 220G are formed. That is, two battery cells 110 may be seated on one first cell frame 210 or second cell frame 220. Further, an adhesive or double-sided tape is applied between the battery cells 110 and the housing grooves 210G and 220G, so that the battery cells 110 can be fixed to the first cell frame 210 or the second cell frame 220.

The first cell frame 210 or the second cell frame can protect the side surfaces of the battery cells 110 to prevent the battery cells 110 from being damaged. In particular, it is possible to prevent one side of the battery cell 110 from being damaged by the bent part 310B of the cooling tube 310 during charging and discharging of the battery cell 110. That is, the first cell frame 210 and the second cell frame can supplement the stiffness of the battery cell group 110G. Further, the first cell frame 210 or the second cell frame can include an electrically insulating material to insulate and protect one side of the battery cells 110.

Further, as described above, the battery cells 110 within the battery cell group 110G according to the present embodiment are wrapped by the cooling tube 310 of the heat sink 300 while being inserted into any one of the housing grooves 210G and 220G of either the first cell frame 210 or the second cell frame 220. At this time, the first cell frame 210 or the second cell frame 220 can improve the assembly efficiency and manufacturing processability between the battery cells 110 and the heat sink 300 and enhance structural stability. The plurality of battery cells 110 are divided into battery cell groups 110G by the first cell frame 210 or the second cell frame 220, and at least one battery cell 110 can be fixed within the battery cell group 110G. Therefore, the zigzag-shaped cooling tube 310 can be more stably and easily provided between the plurality of battery cells 110. In particular, since the bent part 310B is formed so as to correspond to the first cell frame 210 or the second cell frame 220, the reference point where the bent part 310B is formed becomes clear. If the first cell frame 210 or the second cell frame 220 does not exist, it is difficult to establish the reference point in arranging the cooling tube 310 having the bent part 310B between the battery cells 110. It is necessary to fix a pouch-shaped battery cell 110, which is slightly low in stiffness and flexible, in a specific position, and arrange a heat sink. In the absence of the first and second cell frames 210 and 220, such an implementation is difficult.

After at least one battery cell 110 is inserted into the first cell frame 210 or the second cell frame 220 to form a battery cell group 110G, the cooling tubes 310 are arranged in a zigzag shape, while fixing the bent part 310B using the first cell frame 210 or the second cell frame 220 as a reference point, so that assembly becomes easier.

That is, the first cell frame 210 or the second cell frame 220 according to the present embodiment can function as a support structure and a fixed reference point in the unit of cell group 110G in order to easily realize an assembly structure between the battery cells 110 and the cooling tubes 310 continuing in a zigzag shape

Meanwhile, each of the first cell frame 210 and the second cell frame 220 may include protrusion parts 210P and 220P formed on opposite sides of the surface on which the housing grooves 210G and 220G are formed. The protrusion part 210P of the first cell frame 210 and the protrusion part 220P of the second cell frame 220 each are configured to be coupled with the upper frame 400 and the lower frame 500, and will be described in detail below.

Referring back to FIGS. 3, 4, 7 and 11, the upper frame 400 according to the present embodiment may be located higher than the first cell frames 210, and the lower frame 500 may be located lower than the second cell frames 220. At this time, the first cell frame 210 may be coupled to the upper frame 400 at a lower side of the upper frame 400, and the second cell frame 220 may be coupled to the lower frame 500 at an upper side of the lower frame 500.

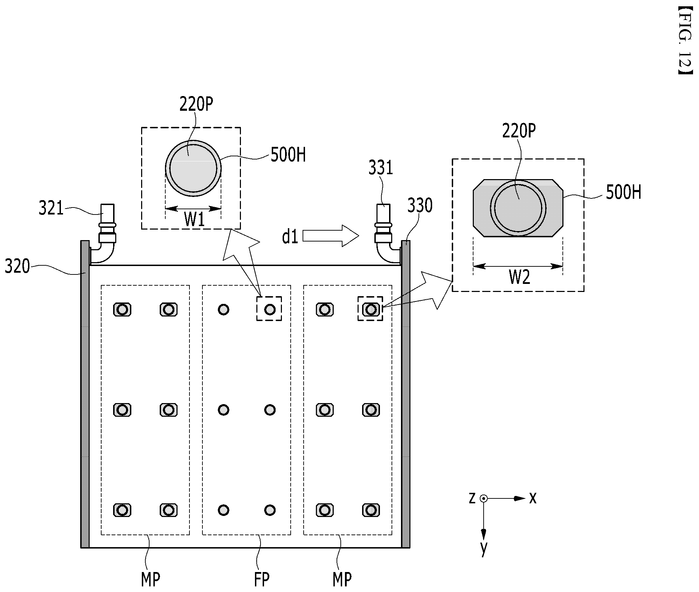

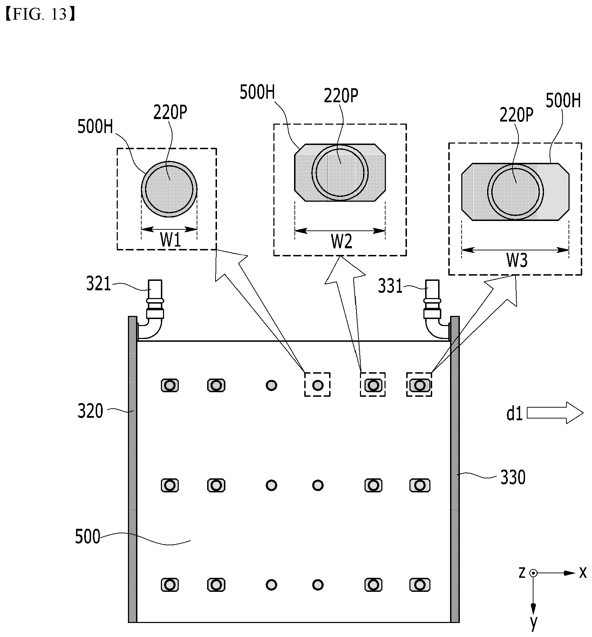

Specifically, the upper frame 400 and the lower frame 500 may be formed with insertion holes 400H and 500H into which the protrusions parts 210P and 220P are inserted, respectively. The insertion hole 500H formed in the lower frame 500 is shown in FIGS. 12 and 13.

The protrusion part 210P of the first cell frame 210 may be inserted into the insertion hole 400H of the upper frame 400. The protrusion part 220P of the second cell frame 220 may be inserted into the insertion hole 500H of the lower frame 500. The first cell frame 210 and the upper frame 400 may be coupled in such a manner that the protrusion part 210P of the first cell frame 210 is inserted into the insertion hole 400H of the upper frame 400, and the second cell frame 220 and the lower frame 500 may be coupled in such a manner that the protrusion part 220P of the second cell frame 220 is inserted into the insertion hole 500H of the lower frame 500.

Further, if necessary, a part of the first cell frame 210 and a part of the upper frame 400 may be fixed with an adhesive, and a part of the second cell frame 220 and a part of the lower frame 500 may be fixed with an adhesive.

Next, a moving frame structure according to embodiments of the present invention will be described in detail with reference to FIGS. 12 and 13. FIGS. 12 and 13 specifically show only the insertion hole 500H formed in the lower frame 500, but the same or similar structure to the insertion hole 500H described below can be applied even to the insertion hole 400H formed in the upper frame 400.

FIG. 12 is a bottom view of the battery module of FIG. 3. Specifically, FIG. 12 is a diagram of the battery module of FIG. 3 as viewed in the z-axis direction on the xy plane.

Referring to FIGS. 7, 8, 11 and 12 together, as described above, the protrusion part 210P of the first cell frame 210 may be inserted into the insertion hole 400H of the upper frame 400, and the protrusion part 220P of the second cell frame 220 may be inserted into the insertion hole 500H of the lower frame 500. At least one of the insertion holes 400H and 500H has an opening width that is wider than that of the protrusion parts 210P and 220P in a first direction d1, which is a direction in which the battery cell groups 110G are stacked, whereby the protrusion parts 210P and 220P inserted therein is movable in the first direction d1 or in the opposite direction.

In the case of the left side of the enlarged portion in FIG. 12, the opening width W1 of the insertion hole 500H corresponds to substantially the same as the width of the protrusion part 220P. On the other hand, in the case of the right side of the enlarged portion in FIG. 12, the opening width W2 of the insertion hole 500H is wider than the width of the protrusion part 220P, so that the protrusion part 220P is movable in the first direction d1 or in the opposite direction.

More specifically, at least one of the upper frame 400 and the lower frame 500 may include a fixed part FP and a moving part MP.

The opening width W2 in the first direction d1 of the insertion hole 500H in the moving part MP may be wider than the width W1 in the first direction d1 of the insertion hole 500H in the fixed part FP. That is, the battery cell groups 110G located in the region corresponding to the moving part MP are slightly free to move in the first direction d1 or in the opposite direction by the insertion hole 500H having a wide opening width W2, while the movement of the battery cell groups 110G located in the region corresponding to the fixed part FP are restricted by the insertion hole 500H having an opening width W1 corresponding to the protrusion part 220P. In one example, such a moving part MP may be formed in a plurality of numbers, wherein the moving parts MP may be located at both ends in a direction parallel to the first direction d1, respectively, and the fixed part FP may be located between the moving parts MP.

In the battery cell stack 120 in which battery cells 110, which are pouch battery cells, are stacked, the battery cells 110 can swell greatly along the stacking direction when swelling of the battery cells 110 occurs. In particular, when the number of battery cells applied to the battery module increases, since the battery cells 110 located on both outer regions of the stacking direction of the battery cells 110 are pushed out most largely during swelling of the battery cells 110, they receive a large pressing force and a large reaction force acts within the fixed module frame. If the threshold value of pressing force or reaction force is exceeded, it adversely affects the performance or lifespan of the battery cell 110.

Therefore, in the battery module 100 according to the present embodiment, the moving parts MP that allow the movement of the battery cell group 110G to some extent are provided at both ends in the first direction d1, thereby attempting to reduce the pressing force and repulsive force applied to the battery cells 110 located outside when swelling occurs. Thereby, the variation of the pressing force applied to each battery cell 110 during swelling can be alleviated, which may lead to improved performance and longer lifespan of the battery module 100. That is, the coupling form between the first and second cell frames 210 and 220 and the upper and lower frames 400 and 500 according to the present embodiment is combined with the previously described zigzag shape of the heat sink 300 to realize a moving frame structure. Such a moving frame structure provides structural flexibility and fluidity against swelling of the battery cell, thereby being able to alleviate the variation of pressing force and prevent the generation of damage such as crack in the battery cell.

FIG. 13 is a bottom view of a battery module according to another embodiment of the present invention.

Referring to FIG. 13, the protrusion part 220P of the second cell frame 220 may be inserted into the insertion hole 500H of the lower frame 500, similarly to FIG. 12. Although not specifically illustrated, the protrusion part 210P of the first cell frame 210 may be inserted into the insertion hole 400H of the upper frame 400.

At this time, at least one of the upper frame 400 and the lower frame 500 is configured such that the opening width of the insertion holes 400H and 500H in the first direction d1 may become gradually wide from a central part toward the first direction d1 and a direction opposite to the first direction d1. Referring to the opening widths W1, W2 and W3 of the insertion holes 500H in the first direction d1 shown in FIG. 13, the opening widths W1, W2 and W3 of the insertion holes 500H in the first direction d1 gradually increase from the central part toward the outside, which is the direction of both ends. The opening width W1 in the first direction d1 of the insertion hole 500H located at the central part is the narrowest, and the opening width W3 in the first direction d1 of the insertion hole 500H located on the outermost may be the widest.

As described above, the battery cells 110 located on both outer regions in the stacking direction of the battery cells 110 are pushed out most largely during swelling of each battery cell 110. Therefore, in the present embodiment, the opening widths W1, W2 and W3 of the insertion holes 400H and 500H in the first direction d1 are designed to gradually increase from the central part toward both ends in the stacking direction of the battery cells 110, so that allowable degree of moving of the battery cells 110 during swelling was set to correspond in compliance with the position. Therefore, variations of the pressing force applied to each battery cell 110 during swelling can be alleviated, which leads to improved performance and increased lifespan of the battery module 100.

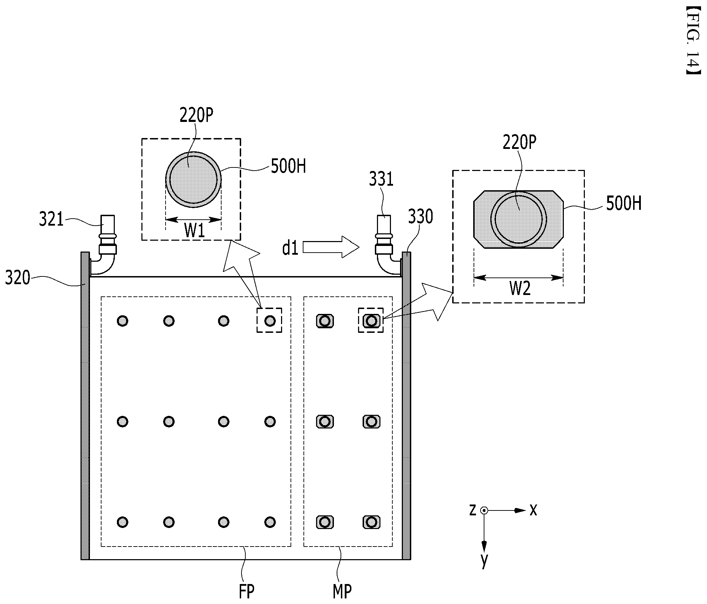

FIG. 14 is a bottom view of a battery module according to another embodiment of the present invention.

Referring to FIG. 14, the protrusion part 220P of the second cell frame 220 may be inserted into the insertion hole 500H of the lower frame 500, similarly to FIGS. 12 and 13. Although not specifically illustrated, the protrusion part 210P of the first cell frame 210 may be inserted into the insertion hole 400H of the upper frame 400.

At this time, the moving part MP described above may be located at one end in a direction parallel to the first direction d1. The remaining region may be formed of the fixed part FP. Depending on the design of the inside of the battery pack in which the battery module is mounted, a region in which the insertion holes 400H and 500H having a relatively wide opening width in the first direction d1 are formed can be needed only at one end in a direction parallel to the first direction d1. For example, when it is necessary to restrict movement in one direction according to the environment inside the battery pack, a structure in which the moving part MP is provided only at one end in a direction parallel to the first direction d1 can be applied as shown in FIG. 14.

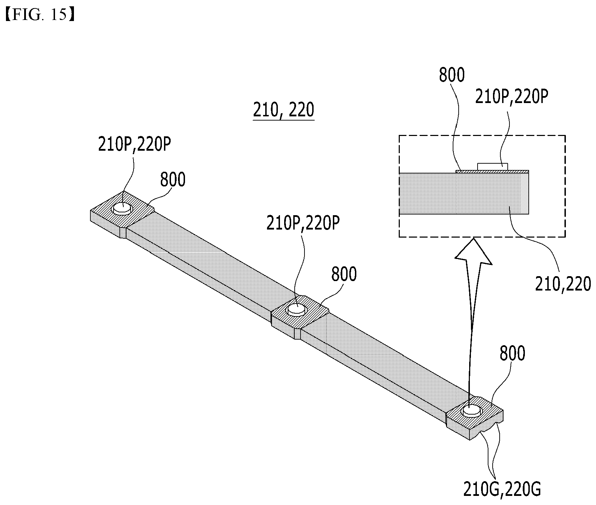

FIG. 15 is a perspective view showing a state in which an adhesive member is attached to a first cell frame and a second cell frame according to an embodiment of the present invention.

Referring to FIGS. 4, 7, 12 and 15 together, in the fixed part FP, the first cell frame 210 and the second cell frame 220 may be attached to the upper frame 400 and the lower frame 500 through the adhesive member 800, respectively.

As described above, the first cell frame 210 may be coupled to the upper frame 400 at a lower side of the upper frame 400, and the second cell frame 220 may be coupled to the lower frame 500 at an upper side of the lower frame 500. At this time, in the fixed part FP, the first cell frame 210 may be adhered to the lower surface of the upper frame 400 through the adhesive member 800, and the second cell frame 220 may be adhered to the upper surface of the lower frame 500 through the adhesive member 800 .

In one example, the protrusion part 210P of the first cell frame 210 may be inserted into the insertion hole 400H of the upper frame 400, and the protrusion part 220P of the second cell frame 220 may be inserted into the insertion hole 500H of the lower frame 500. As shown in FIG. 15, an adhesive member 800 may be provided in a peripheral region of the protrusion parts 210P and 220P. In the case of the present embodiment, in addition to adjusting the opening width of the insertion holes 400H and 500H, the adhesive member 800 is provided in the fixed part FP to restrict the movement of the battery cell group 110G in the fixed part FP. In addition, the degree of coupling between the first and second cell frames 210 and 220 and the upper and lower frames 400 and 500 is supplemented by the adhesive member 800, thereby enhancing the structural stability of the entire battery module.

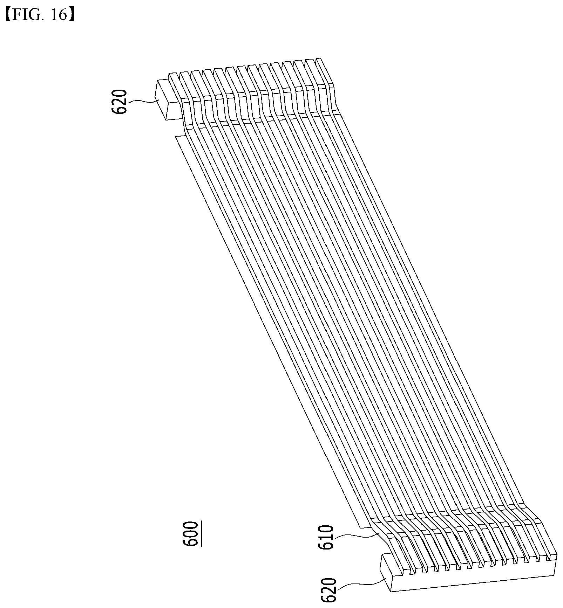

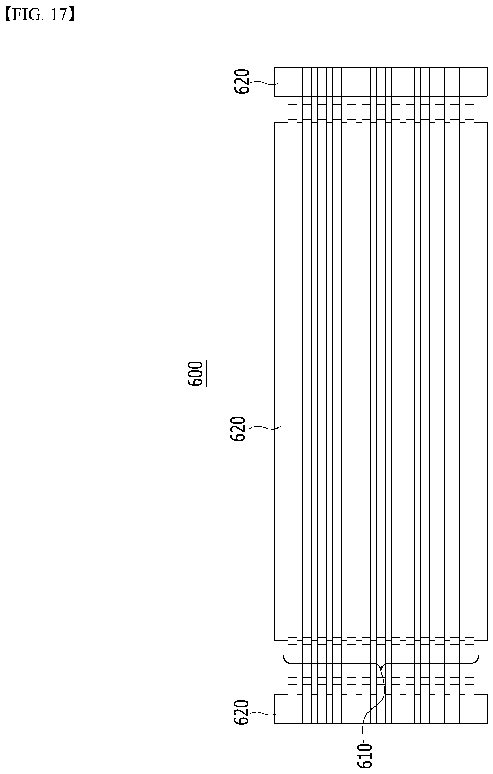

Next, the side plate according to the present embodiment will be described in detail with reference to FIGS. 16 and 17.

FIGS. 16 and 17 are a perspective view and a side view of a side plate included in the battery module of FIG. 3, respectively.

Referring to FIGS. 3, 4, 16 and 17 together, the battery module 100 according to the present embodiment may further include side plates 600 located on both side surfaces of the battery cell stack 120 along the first direction d1. The side plate 600 may be a leaf spring shape.

The side plate 600 according to the present embodiment includes a material having elastic force, and thus, can apply elastic force to the battery cell stack 120 with the repulsion against the pressure applied in the direction of each side plate 600 in the battery cell stack 120.

Specifically, each side plate 600 may have a leaf spring shape that is recessed in the direction in which the battery cell stack 120 is located. More specifically, as shown in FIG. 3, the central part of the side plate 600 may have a shape recessed so as to be bent toward a place where the battery cell stack 120 is located, than both ends of the side plate 600 along a direction (y-axis direction or -y-axis direction) parallel to the direction in which the electrode lead 111 of the battery cell 110 protrudes. Thereby, even if high pressure acts in the direction of each side plate 600 in the battery cell stack 120 due to swelling of the battery cells 110, the side plate 600 exhibiting an elastic behavior can control swelling of the battery cells 110 while absorbing swelling of the battery cell stack 120.

That is, the side plate 600 according to the present embodiment has a leaf spring shape, whereby it not only functions as a frame that houses the battery cell stack 120, but can also function as an elastic component that controls swelling of the battery cells 110.

Moreover, the side plate 600 according to the present embodiment may have a shape in which a plurality of leaf spring members 610 are arranged at intervals along the height direction as shown in FIGS. 3, 16 and 17. The individual leaf spring members 610 whose central parts are curved to the place where the battery cell stacks 120 are located may be arranged at regular intervals along the height direction. Here, the height direction is a direction perpendicular to one surface of the upper frame 400 or the lower frame 500, which means a direction parallel to the z-axis direction.

Further, the side plate 600 may further include a connection part 620 connecting each leaf spring member 610 so that each leaf spring member 610 can be maintained at a regular interval. The number or positions of the connection parts 620 are not particularly limited, but they are preferably located at both ends of the side plate 600, respectively. In some cases, as shown in FIGS. 16 and 17, a connection part 620 connecting each leaf spring member 610 may be located even in the central part.

As described above, the side plate 600 is not configured in a single leaf spring shape, but is configured to include individual leaf spring members 610 whose parts are separated from each other, thereby capable of individually responding according to the swelling characteristics of each position of the battery cell 110. That is, the present embodiment in which the individual leaf spring members 610 are separated has an advantage of exhibiting a flexible elastic behavior against swelling of the battery cell 110 as compared to a completely integrated structure.

Below, the material of the side plate 600 according to the present embodiment will be described in detail. The side plate 600 according to the present embodiment may include a composite material, and the composite material may be Fiber Reinforced Plastic (FRP) or Carbon Fiber Reinforced Plastic (CFRP). The fiber-reinforced plastic or carbon fiber-reinforced plastic is a plastic-based composite material reinforced with glass fiber and carbon fiber, respectively, and is a material with excellent mechanical properties and corrosion resistance.

When a metal material is applied to the side plate 600, there is a problem that the amount of displacement capable of absorbing swelling of the battery cell 110 is small due to its low tensile modulus. Even if the battery cell stack 120 is slightly displaced due to the swelling of the battery cell 110, a large stress is generated in the bent part having a leaf spring shape. In the case of battery cells with high degree of swelling, such as pure Si cells, all-solid-state batteries, and high-SiO-content cells, since the degree of swelling is large, the amount of displacement that should be absorbed by the battery module is also large. Therefore, a frame using a metal material in a battery module to which these battery cells are applied has a limit in absorbing swelling.

On the other hand, in the case of fiber-reinforced plastics or carbon fiber-reinforced plastics, since they have a tensile strength equal to or greater than that of metal and also have a lower Young's modulus than metal, they can exhibit elastic behavior capable of effectively absorbing swelling while having high rigidity against swelling of battery cells. In the case of a pure Si cell or an all-solid-state battery, a maximum pressure of 3 to 8 MPa is generated at EOL (End Of Life), but a composite material of fiber-reinforced plastic or carbon fiber-reinforced plastic can exhibit elastic behavior even at such a high pressure, and is suitable for application to the side plate 600 according to the present embodiment.

Further, since fiber-reinforced plastics or carbon fiber-reinforced plastics are produced by laminating glass fibers or carbon fibers and then curing a resin around them, they have the advantage of being able to set strengths and elastic moduli that are different for each direction.

However, composite materials of existing fiber-reinforced plastics or carbon fiber-reinforced plastics have been developed with a focus on lightweight and high-strength characteristics, and have the problem of being brittle and relatively expensive. Therefore, the composite material according to the present embodiment attempted to solve the above problems by changing the material of the resin and including a sheet material in addition to the fiber material.

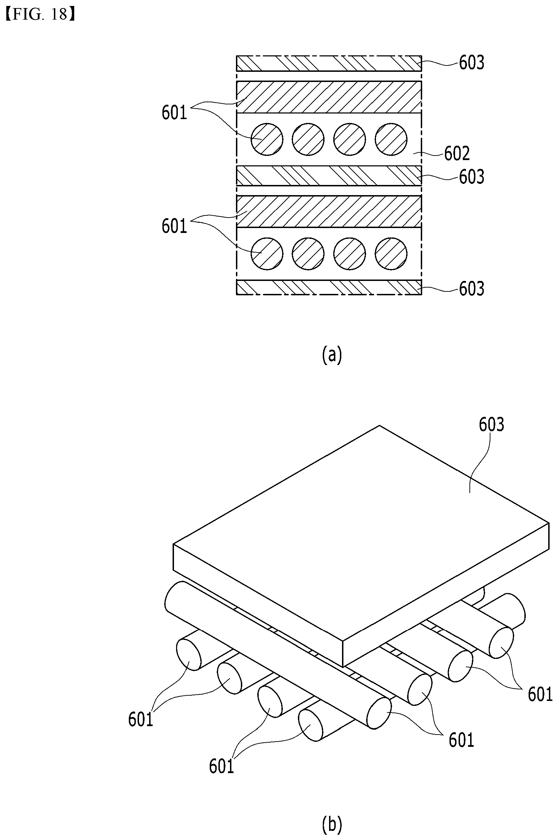

FIGS. 18 (a) and (b) are diagrams for explaining the material of the side plate according to an embodiment of the present invention.

Referring to FIGS. 18 (a) and (b), the composite material of fiber-reinforced plastics or carbon fiber-reinforced plastics is produced by laminating glass fibers or carbon fibers and then curing a resin around them, but a composite material according to the present embodiment may include a fibrous material, a resin and a sheet material interposed between the fibrous materials. The fiber material according to the present embodiment may include glass fibers or carbon fibers. The resin to be cured may include at least one of epoxy or urethane, and the sheet material may include at least one of PET (polyethylene terephthalate) and PU (polyurethane).

More specifically, the resin 602 may include urethane. An attempt was made to improve the brittleness of composite materials by applying urethane having soft properties as a material of the resin 602. In addition, an attempt was made to reinforce the soft characteristics of the composite material, reduce the amount of expensive fiber materials 601 used and thus reduce costs by interposing a soft sheet material 601 between the fiber materials 601.

Meanwhile, referring to FIG. 4 again, in the battery module 100 according to the present embodiment, an expanded foam 700 may be injected into at least one of a space between the battery cell stack 120 and the upper frame 400 or a space between the battery cell stack 120 and the lower frame 500. More specifically, the expanded foam 700 may be injected into a space surrounded by some of the battery cells 110, the first cell frame 210 and the upper frame 400. Further, the expanded foam 700 may be injected into the space surrounded by some of the battery cells 110, the second cell frame 220 and the lower frame 500. Such expanded foam 700 may include a silicone material. This expanded foam 700 can perform a role like a kind of spring that repeats compression and expansion up to a certain pressure. When high swelling occurs in the battery cells 110, the expanded foam 700 repeating compression and expansion may provide structural flexibility to the battery module 100 and can help prevent damage such as cracks from occurring on the side surface of the battery cell 110.

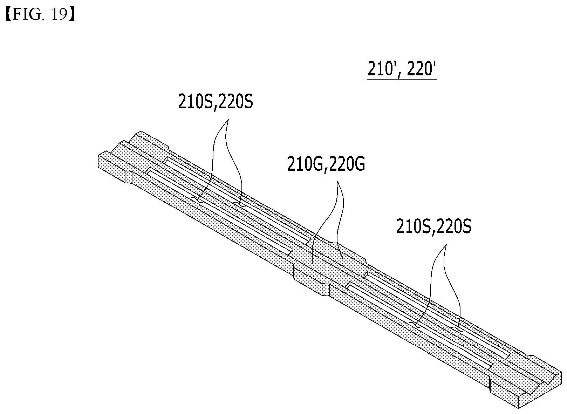

FIG. 19 is a perspective view showing a first cell frame or a second cell frame according to a modified embodiment of the present invention.

Referring to FIGS. 7 and 19 together, similarly to the previously described embodiment, each of the first cell frame 210' and the second cell frame 220' according to a modified embodiment of the present invention may be formed with housing grooves 210G and 220G in which the battery cells 110 are seated. At this time, according to the present embodiment, slits 210S and 220S having an open shape may be formed in the housing grooves 210G and 220G. At least one battery cell 110 in the battery cell group 110G may contact the bent part 310B of the cooling tube 310 through the slits 210S and 220S. In addition to the surface cooling structure in which the cooling tube 310 contacts one surface of the battery main body 113 of the battery cells 110, at least one battery cell 110 may further contact the bent part 310B. That is, cooling performance may be improved by enlarging an area where the battery cell 110 contacts the cooling tube 310 through the slits 210S and 220S.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present invention described above can be mounted together with various control and protection systems such as a BMS(battery management system), a BDU(battery disconnect unit), and a cooling system to form a battery pack.

The battery module or the battery pack can be applied to various devices. For example, it can be applied to vehicle means such as an electric bike, an electric vehicle, and a hybrid electric vehicle, and may be applied to various devices capable of using a secondary battery, without being limited thereto.

Although the invention has been described in detail above with reference to preferred embodiments of the present disclosure, the scope of the present invention is not limited thereto, and various modifications and improvements can be made by those skilled in the art using the basic concepts of the present invention, which are defined in the appended claims, which also falls within the scope of the present invention.

### [Description of Reference Numerals]

100: battery module
110: battery cell
110G: battery cell group
120: battery cell stack
210: first cell frame
220: second cell frame
300: heat sink
310: cooling tube
310B: bent part
400: upper frame
500: lower frame

## Claims

1. A battery module (100) comprising:
a battery cell stack (120) in which battery cell groups (110G) including at least one battery cell (110) are stacked along a first direction (d1); and
a heat sink (300) including a cooling tube (310) through which a coolant flows,
wherein each of the battery cell groups (110G) further comprises a first cell frame (210, 210') located on the upper part of at least one battery cell (110) or a second cell frame (220, 220') located on the lower part of at least one of the battery cells (110),
wherein the cooling tube (310) comprises at least one bent part (310B) having a curved shape,
wherein the cooling tube (310) covers both side surfaces of any one of the battery cell groups (110G) while the bent part (310B) surrounds the upper part or the lower part of the battery cell group (110G), and,
wherein each of the first cell frame (210, 210') and the second cell frame (220, 220') comprises a housing groove (210G, 220G) in which the at least one battery cell (110) is seated, and a protrusion part (210P, 220P) formed on a surface opposite to the surface on which the housing groove (210G, 220G) is formed,
wherein an upper frame (400) and a lower frame (500) are located on the upper part and the lower part of the battery cell stack (120), respectively, and
wherein each of the upper frame (400) and the lower frame (500) is formed with an insertion hole (400H, 500H) into which the protrusion part (210P, 220P) is inserted.

2. The battery module of claim 1, wherein:
the bent parts (310B) are formed in a plurality of numbers, any one of the bent parts (310B) surrounds both side surfaces and an upper part of any one of the battery cell groups (110G), the other one of the bent parts (310B) surrounds both side surfaces and a lower part of the other one of the battery cell groups (110G), and the cooling tubes (310) continue in a zigzag shape.

3. The battery module of claim 2, wherein:
any one of the bent parts (310B) surrounds both side surfaces of any one of the battery cell groups (110G) and the first cell frame (210, 210'), and
the other one of the bent parts (310B) surrounds the both side surfaces of the other battery cell groups (110G) and the second cell frame (220, 220').

4. The battery module of claim 1,
wherein the first cell frame (210, 210') is coupled to the upper frame (400) at a lower side of the upper frame (400), and
the second cell frame (220, 220') is coupled to the lower frame (500) at an upper side of the lower frame (500).

5. The battery module of claim 4, wherein:
an expanded foam (700) is injected into at least one of a space between the battery cell stack (120) and the upper frame (400) or a space between the battery cell stack (120) and the lower frame (500).

6. The battery module of claim 1, wherein:
the protrusion part (210P) of the first cell frame (210) is inserted into the insertion hole (400H) of the upper frame (400), and
the protrusion part (220P) of the second cell frame (220) is inserted into the insertion hole (500H) of the lower frame (500).

7. The battery module of claim 6, wherein:
at least one of the insertion holes (400H, 500H) has an opening width (W1, W2, W3) wider than that of the protrusion part (210P, 220P) in the first direction (d1), which is a direction in which the battery cell groups (110G) are stacked, so that the protrusion part (210P, 220P) is movable in the first direction (d1) or in the opposite direction.

8. The battery module of claim 6, wherein:
at least one of the upper frame (400) or the lower frame (500) comprises a fixing part (FP) and a moving part (MP), and
an opening width (W2, W3) in the first direction (d1) of the insertion hole (400H, 500H) in the moving part (MP) is wider than an opening width (W1) in the first direction (d1) of the insertion hole (400H, 500H) in the fixing part (FP).

9. The battery module of claim 8, wherein:
in the fixing part (FP), the first cell frame (210, 210') and the second cell frame (220, 220') are adhered to the upper frame (400) and the lower frame (500) through an adhesive member (800), respectively.

10. The battery module of claim 6, wherein:
at least one of the upper frame (400) and the lower frame (500) is configured such that the opening width (W1, W2, W3) of the insertion holes (400H, 500H) in the first direction (d1) becomes gradually wide from a central part toward the first direction (d1) and a direction opposite to the first direction (d1).

11. The battery module of claim 1, wherein:
the housing groove (210G, 220G) is formed with a slit (210S, 220S) having an open shape, and
at least one battery cell (110) in the battery cell group (110G) is in contact with the bent part (310B) through the slit (210S, 220S).

12. The battery module of claim 1,
further comprising side plates (600) located on both side surfaces of the battery cell stack (120) along the first direction (d1),
wherein the side plate (600) has a leaf spring shape.

13. The battery module of claim 12, wherein:
the side plate (600) has a leaf spring shape that is recessed in a direction in which the battery cell stack (120) is located.

14. The battery module of claim 1, wherein:
the heat sink (300) comprises an inflow manifold (320) connected to one end of the cooling tube (310) and a discharge manifold (330) connected to the other end of the cooling tube (310), and
the inflow manifold (320) is formed with an inflow part (321) into which the coolant flows, and the discharge manifold (330) is formed with a discharge part (331) through which coolant is discharged.

## Patentansprüche

1. Batteriemodul (100) aufweisend:
einen Batteriezellenstapel (120), in dem Batteriezellengruppen (110G), die mindestens eine Batteriezelle (110) aufweisen, entlang einer ersten Richtung (d1) gestapelt sind; und
eine Wärmesenke (300), die ein Kühlrohr (310) aufweist, durch das ein Kühlmittel strömt,
wobei jede der Batteriezellengruppen (110G) ferner einen ersten Zellenrahmen (210, 210') aufweist, der an dem oberen Teil von mindestens einer Batteriezelle (110) angeordnet ist, oder einen zweiten Zellenrahmen (220, 220'), der an dem unteren Teil von mindestens einer der Batteriezellen (110) angeordnet ist,
wobei das Kühlrohr (310) mindestens einen gebogenen Teil (31oB) aufweist, der eine gekrümmte Form aufweist,
wobei das Kühlrohr (310) beide Seitenflächen von irgendeiner der Batteriezellengruppen (110G) bedeckt, während der gebogene Teil (31oB) den oberen Teil oder den unteren Teil der Batteriezellengruppe (110G) umgibt, und
wobei jeder von dem ersten Zellenrahmen (210, 210') und dem zweiten Zellenrahmen (220, 220') eine Gehäusenut (210G, 220G), in der die mindestens eine Batteriezelle (110) sitzt, und einen Vorsprungsteil (210P, 220P) aufweist, der an einer Fläche ausgebildet ist, die der Fläche gegenüberliegt, an der die Gehäusenut (210G, 220G) ausgebildet ist,
wobei ein oberer Rahmen (400) und ein unterer Rahmen (500) an dem oberen Teil bzw. dem unteren Teil des Batteriezellenstapels (120) angeordnet sind, und
wobei jeder von dem oberen Rahmen (400) und dem unteren Rahmen (500) mit einem Einsetzloch (400H, 500H) ausgebildet ist, in das der Vorsprungsteil (210P, 220P) eingesetzt ist.

2. Batteriemodul nach Anspruch 1, wobei:
die gebogenen Teile (310B) in einer Mehrzahl ausgebildet sind, irgendeiner der gebogenen Teile (310B) beide Seitenflächen und einen oberen Teil von irgendeiner der Batteriezellengruppen (110G) umgibt, der andere der gebogenen Teile (310B) beide Seitenflächen und einen unteren Teil der anderen der Batteriezellengruppen (110G) umgibt, und die Kühlrohre (310) sich in einer Zickzackform fortsetzen.

3. Batteriemodul nach Anspruch 2, wobei:
irgendeiner der gebogenen Teile (310B) beide Seitenflächen von irgendeiner der Batteriezellengruppen (110G) und den ersten Zellenrahmen (210, 210') umgibt, und
der andere der gebogenen Teile (310B) die beiden Seitenflächen der anderen Batteriezellengruppen (110G) und den zweiten Zellenrahmen (220, 220') umgibt.

4. Batteriemodul nach Anspruch 1,
wobei der erste Zellenrahmen (210, 210') mit dem oberen Rahmen (400) an einer unteren Seite des oberen Rahmens (400) gekoppelt ist, und
der zweite Zellenrahmen (220, 220') mit dem unteren Rahmen (500) an einer oberen Seite des unteren Rahmens (500) gekoppelt ist.

5. Batteriemodul nach Anspruch 4, wobei:
ein expandierter Schaum (700) in mindestens einen von einem Raum zwischen dem Batteriezellenstapel (120) und dem oberen Rahmen (400) oder einem Raum zwischen dem Batteriezellenstapel (120) und dem unteren Rahmen (500) eingespritzt ist.

6. Batteriemodul nach Anspruch 1, wobei:
der Vorsprungsteil (210P) des ersten Zellenrahmens (210) in das Einsetzloch (400H) des oberen Rahmens (400) eingesetzt ist, und
der Vorsprungsteil (220P) des zweiten Zellenrahmens (220) in das Einsetzloch (500H) des unteren Rahmens (500) eingesetzt ist.

7. Batteriemodul nach Anspruch 6, wobei:
mindestens eines der Einsetzlöcher (400H, 500H) eine Öffnungsbreite (W1, W2, W3) aufweist, die breiter ist als die des Vorsprungsteils (210P, 220P) in der ersten Richtung (d1), die eine Richtung ist, in der die Batteriezellengruppen (110G) gestapelt sind, so dass der Vorsprungsteil (210P, 220P) in der ersten Richtung (d1) oder in der entgegengesetzten Richtung beweglich ist.

8. Batteriemodul nach Anspruch 6, wobei:
mindestens einer des oberen Rahmens (400) oder des unteren Rahmens (500) einen Befestigungsteil (FP) und einen beweglichen Teil (MP) aufweist, und
eine Öffnungsbreite (W2, W3) in der ersten Richtung (d1) des Einsetzlochs (400H, 500H) in dem beweglichen Teil (MP) breiter ist als eine Öffnungsbreite (W1) in der ersten Richtung (d1) des Einsetzlochs (400H, 500H) in dem Befestigungsteil (FP).

9. Batteriemodul nach Anspruch 8, wobei:
in dem Befestigungsteil (FP) der erste Zellenrahmen (210, 210') und der zweite Zellenrahmen (220, 220') jeweils durch ein Klebeelement (800) an dem oberen Rahmen (400) und dem unteren Rahmen (500) angeklebt sind.

10. Batteriemodul nach Anspruch 6, wobei:
mindestens einer von dem oberen Rahmen (400) und dem unteren Rahmen (500) so konfiguriert ist, dass die Öffnungsbreite (W1, W2, W3) der Einsetzlöcher (400H, 500H) in der ersten Richtung (d1) von einem Mittelteil in Richtung der ersten Richtung (d1) und einer Richtung entgegengesetzt zu der ersten Richtung (d1) graduell breiter wird.

11. Batteriemodul nach Anspruch 1, wobei:
die Gehäusenut (210G, 220G) mit einem Schlitz (210S, 220S) ausgebildet ist, der eine offene Form aufweist, und
mindestens eine Batteriezelle (110) in der Batteriezellengruppe (110G) mit dem gebogenen Teil (31oB) durch den Schlitz (210S, 220S) in Kontakt ist.

12. Batteriemodul nach Anspruch 1,
ferner aufweisend Seitenplatten (600), die an beiden Seitenflächen des Batteriezellenstapels (120) entlang der ersten Richtung (d1) angeordnet sind,
wobei die Seitenplatte (600) eine Blattfederform aufweist.

13. Batteriemodul nach Anspruch 12, wobei:
die Seitenplatte (600) eine Blattfederform aufweist, die in einer Richtung vertieft ist, in der der Batteriezellenstapel (120) angeordnet ist.

14. Batteriemodul nach Anspruch 1, wobei:
die Wärmesenke (300) einen Einlassverteiler (320), der mit einem Ende des Kühlrohrs (310) verbunden ist, und einen Auslassverteiler (330) aufweist, der mit dem anderen Ende des Kühlrohrs (310) verbunden ist, und
der Einlassverteiler (320) mit einem Einlassteil (321) ausgebildet ist, in den das Kühlmittel strömt, und der Auslassverteiler (330) mit einem Auslassteil (331) ausgebildet ist, durch den das Kühlmittel ausgelassen wird.

## Revendications

1. Module de batterie (100) comprenant :
un empilement de cellules de batterie (120) dans lequel des groupes de cellules de batterie (110G) comprenant au moins une cellule de batterie (110) sont empilés dans une première direction (d1) ; et
un dissipateur thermique (300) comprenant un tube de refroidissement (310) par lequel circule un réfrigérant,
chacun des groupes de cellules de batterie (110G) comprenant en outre un premier cadre de cellules (210, 210') situé sur la partie supérieure d'au moins une cellule de batterie (110) ou un deuxième cadre de cellules (220, 220') situé sur la partie inférieure d'au moins une des cellules de batterie (110),
le tube de refroidissement (310) comprenant au moins un élément plié (310B) ayant une forme courbe,
le tube de refroidissement (310) couvrant les deux faces latérales d'un quelconque des groupes de cellules de batterie (110G) tandis que l'élément plié (310B) entoure l'élément supérieur ou l'élément inférieur du groupe de cellules de batterie (110G), et,
chacun du premier cadre de cellules (210, 210') et du deuxième cadre de cellules (220, 220') comprenant une rainure du boîtier (210G, 220G) dans laquelle est placée au moins une cellule de batterie (110), et une partie saillante (210P, 220P) formée sur une surface située face à la surface sur laquelle la rainure du boîtier (210G, 220G) est formée,
un cadre supérieur (400) et un cadre inférieur (500) étant situés respectivement sur l'élément supérieur et l'élément inférieur de l'empilement de cellules de batterie (120), et
chacun du cadre supérieur (400) et du cadre inférieur (500) étant réalisé avec un trou d'insertion (400H, 500H) dans lequel la partie saillante (210P, 220P) est insérée.

2. Module de batterie selon la revendication 1,
les éléments pliés (310B) étant réalisés dans une pluralité, un quelconque des éléments pliés (310B) entourant les deux surfaces latérales et un élément supérieur de l'un quelconque des groupes de cellules de batterie (110G), l'autre des éléments pliés (310B) entourant les deux surfaces latérales et un élément inférieur de l'autre des groupes de cellules de batterie (110G), et les tubes de refroidissement (310) continuant en forme de zigzag.

3. Module de batterie selon la revendication 2,
un quelconque des éléments pliés (310B) entourant les deux faces latérales de l'un quelconque des groupes de cellules de batterie (110G) et le premier cadre de cellule (210, 210'), et
l'autre des éléments pliés (310B) entourant les deux faces latérales des autres groupes de cellules de batterie (110G) et le deuxième cadre de cellule (220, 220').

4. Module de batterie selon la revendication 1,
le premier cadre de cellule (210, 210') étant couplé au cadre supérieur (400) sur un côté inférieur du cadre supérieur (400), et
le deuxième cadre de cellule (220, 220') étant couplé au cadre inférieur (500) sur un côté supérieur du cadre inférieur (500).

5. Module de batterie selon la revendication 4,
une mousse expansée (700) étant injectée dans au moins un d'un espace entre l'empilement de cellules de batterie (120) et le cadre supérieur (400) ou un espace entre l'empilement de cellules de batterie (120) et le cadre inférieur (500).

6. Module de batterie selon la revendication 1,
la partie saillante (210P) du premier cadre de batterie (210) étant inséré dans le trou d'insertion (400H) du cadre supérieur (400), et
la partie saillante (220P) du deuxième cadre de batterie (220) étant inséré dans le trou d'insertion (500H) du cadre inférieur (500).

7. Module de batterie selon la revendication 6,
au moins un des trous d'insertion (400H, 500H) présentant une largeur d'ouverture (W1, W2, W3) plus large que celle de la partie saillante (210P, 220P) dans la première direction (d1), qui est une direction dans laquelle les groupes de cellules de batterie (110G) sont empilés, de sorte que la partie saillante (210P, 220P) soit déplaçable dans la première direction (d1) ou dans la direction opposée.

8. Module de batterie selon la revendication 6,
au moins un du cadre supérieur (400) ou du cadre inférieur (500) comprenant un élément de fixation (FP) et un élément mobile (MP), et
une largeur d'ouverture (W2, W3) dans la première direction (d1) du trou d'insertion (400H, 500H) dans l'élément mobile (MP) étant plus large qu'une largeur d'ouverture (W1) dans la première direction (d1) du trou d'insertion (400H, 500H) dans l'élément de fixation (FP).

9. Module de batterie selon la revendication 8,
dans l'élément de fixation (FP), le premier cadre de cellules (210, 210') et le deuxième cadre de cellules (220, 220') étant appliqués respectivement au cadre supérieur (400) et au cadre inférieur (500) par le biais d'un élément adhésif (800).

10. Module de batterie selon la revendication 6,
au moins un du cadre supérieur (400) et du cadre inférieur (500) étant configuré de sorte que la largeur d'ouverture (W1, W2, W3) des trous d'insertion (400H, 500H) dans la première direction (d1) devienne progressivement large d'une partie centrale vers la première direction (d1) et une direction opposée à la première direction (d1).

11. Module de batterie selon la revendication 1,
la rainure du boîtier (210G, 220G) étant formée avec une fente (210S, 220S) ayant une forme ouverte, et
au moins une cellule de batterie (110) dans le groupe de cellules de batterie (110G) se trouvant au contact de la partie pliée (310B) à travers la fente (210S, 220S).

12. Module de batterie (1) selon la revendication 1,
comprenant en outre des plaques latérales (600) situées sur les deux surfaces latérales de l'empilement de piles de batterie (120) dans la première direction (D1),
la plaque latérale (600) ayant une forme de ressort à lame.

13. Module de batterie selon la revendication 12,
la plaque latérale (600) ayant une forme de ressort à lames encastré dans une direction où se trouve l'empilement de cellules de la batterie (120).

14. Module de batterie selon la revendication 1,
le dissipateur thermique (300) comprenant un collecteur d'entrée (320) relié à un bout du tube de refroidissement (310) et un collecteur d'évacuation (330) relié à l'autre bout du tube de refroidissement (310), et
le collecteur d'entrée (320) étant formé avec une partie d'entrée (321) dans laquelle s'écoule le réfrigérant, et le collecteur d'évacuation (330) étant formé avec une partie d'évacuation (331) par laquelle le réfrigérant est évacué.
